# EUROPÄISCHE PATENTSCHRIFT

(11) **EP 1 522 357 B1**
(45) Veröffentlichungstag und Bekanntmachung des Hinweises auf die Patenterteilung: **16.07.2008**
(21) Anmeldenummer: 04021849.7
(22) Anmeldetag: 14.09.2004
(51) Int. Cl.: B21F 1/00, B23K 11/00, H01H 11/00, B21C 37/00

(54) **Elektrodenschliessmechanikvorrichtung**
Mechanism for closing electrodes
Dispositif de fermeture pour des électrodes

(30) Priorität: 10.10.2003 DE 10347074
(43) Veröffentlichungstag der Anmeldung: 13.04.2005
(73) Patentinhaber: Otto Bihler Handels-Beteiligungs-GmbH, 87642 Halblech (DE)
(72) Erfinder: Bihler, Mathias, 87642 Halblech (DE); Köpf, Johann, 87642 Halblech (DE)
(74) Vertreter: Tiesmeyer, Johannes

(56) Entgegenhaltungen:
- EP-A- 0 923 098
- FR-A- 622 674
- US-A- 4 933 531
- US-A- 5 046 706

## Beschreibung

Die vorliegende Erfindung betrifft eine Schweißvorrichtung gemäß dem Oberbegriff von Anspruch 1.

Eine gattungsgemäße Schweißvorrichtung ist aus der US-A-4,933,531 bekannt. Bei dieser bekannten Schweißvorrichtung ist eine bewegliche Schweißelektrode über einen Scherenmechanismus und daran anschließende weitere Lenker mit einem Vorrichtungsgestell verbunden. Die gestellnahen Endpunkte des Scherenmechanismus sind über einen Spindeltrieb verlagerbar. Außerdem kann der gesamte, den Scherenmechanismus einschließende Lenkermechanismus zur Bewegung der Schweißelektrode um eine zur Schweißebene im Wesentlichen orthogonale Drehachse gedreht werden.

Es ist daher Aufgabe der vorliegenden Erfindung, eine Schweißvorrichtung der eingangs genannten Art anzugeben, bei welcher der Bewegungsablauf der Schweißelektroden bei einer Schweißspaltverringerung unter möglichst geringer mechanischer Belastung des Fügeteils erfolgt, insbesondere in einer Phase, in welcher ein Berührkontakt zwischen der Elektrode und dem Fügeteil hergestellt wird. Dabei ist vor allem die erhöhte Empfindlichkeit miniaturisierter Fügeteile gegenüber mechanischen Belastungen zu berücksichtigen.

Diese Aufgabe wird gemäß der vorliegenden Aufgabe durch eine Schweißvorrichtung mit allen Merkmalen des Anspruchs 1 gelöst. Eine erfindungsgemäße Ausführungsform einer Schweißvorrichtung umfasst wenigstens einen Hebelmechanismus als den Kraftübertragungsmechanismus, wobei der Hebelmechanismus ein erstes Lenkersystem aufweist, welches an einem bezüglich ruhender Teile der Schweißvorrichtung fixen Anlenkort um eine Gestell-Drehachse drehbar ist, und wobei der Hebelmechanismus weiterhin ein zweites Lenkersystem aufweist, welches an einem ersten Anlenkort an dem ersten Lenkersystem um eine erste Drehachse drehbar angelenkt und an einem zweiten Anlenkort um eine zweite Drehachse drehbar mit der beweglichen Elektrode verbunden ist.

Dabei umfasst das zweite Lenkersystem eine Mehrzahl von Lenkern, welche im Wesentlichen eine gemeinsame erste und eine gemeinsame zweite Drehachse aufweisen und in Richtung der zweiten Drehachse mit Abstand voneinander angeordnet sind. Durch die Mehrzahl von Lenkersystemen wird zum einen eine Redundanz erreicht, so dass die Schweißvorrichtung auch beim unwahrscheinlichen Fall eines Bruchs eines Lenkers zumindest notbetriebsfähig bleibt. Darüber hinaus gestattet diese Ausführungsform eine günstige symmetrische Kraft- und Bewegungseinleitung und schafft die Voraussetzung für eine spielfreie Verlagerung der beweglichen Schweißelektrode.

Bei dem oben beschriebenen Hebelmechanismus ist nicht ausgeschlossen, dass neben den erwähnten Anlenkorten weitere Anlenkorte vorhanden sind. Vielmehr ist die Beschreibung des Hebelmechanismus derart zu verstehen, dass mindestens die erwähnten Anlenkorte vorhanden sein sollen.

Weiterhin bedeutet "mit der beweglichen Elektrode verbunden" nicht notwendigerweise eine unmittelbare Anlenkung an der beweglichen Elektrode. Die drehbare Verbindung kann auch über ein mit der beweglichen Elektrode verbundenes Bewegung übertragendes Vorrichtungsteil realisiert sein.

Durch die obige Anordnung der Lenkersysteme kann erreicht werden, dass eine Drehbewegung des ersten Anlenkorts um einen Winkelbetrag um den fixen Anlenkort herum in eine Bewegung des zweiten Anlenkorts mit einer sehr kleinen Bewegungskomponente in Elektrodenschließ- und -öffnungsrichtung untersetzt wird. Schläge und Stöße auf ein an der Fügestelle angeordnetes Fügeteil können dadurch vermieden werden. Das tatsächliche Untersetzungsverhältnis ändert sich dabei in Abhängigkeit von der Position des ersten Anlenkortes. Die Bewegungsuntersetzung führt zu einer entsprechenden Kraftübersetzung, so dass Reibungswiderstände, die einer Bewegung des Schweißelektrodenarms entgegenstehen würden, sicher überwunden werden.

Mit "Schweißbereitschaftsstellung" ist dabei eine Stellung der Elektroden bezeichnet, bei welcher durch Berührkontakt zwischen leitenden Teilen im Schweißspalt aus technischer Sicht ein Schweißvorgang erfolgen kann, d. h. eine Stellung, bei welcher zwischen den Elektroden ein Schweißstrom durch das Fügeteil hindurch fließen kann.

Darüber hinaus ist durch geschickte Wahl der Abmessungen der einzelnen Lenkersysteme eine gezielte und reproduzierbare Annäherungsbewegung der Elektroden aufeinander zu im Submillimeterbereich ohne weiteres verwirklichbar.

In einer konstruktiv besonders einfachen Ausführungsform ist der Hebelmechanismus ein Kniehebelmechanismus, bei welchem die Gestell-Drehachse, die erste und die zweite Drehachse jeweils paarweise im Wesentlichen parallel zueinander liegen. Die im Wesentlichen parallele Anordnung der Drehachsen zueinander sorgt für leicht berechenbare Übersetzungsverhältnisse sowie für einen geringeren Betriebsverschleiß und somit für eine lange Lebensdauer und einen reibungsarmen Betrieb der Schweißvorrichtung.

Ebenso wie das zweite Lenkersystem kann auch das erste Lenkersystem eine Mehrzahl von Lenkern umfassen, welche im Wesentlichen eine gemeinsame Gestell-Drehachse aufweisen und in Richtung der Gestell-Drehachse mit Abstand voneinander angeordnet sind. Um den Bearbeitungsaufwand in Grenzen zu halten, umfasst das zweite wie das erste Lenkersystem jeweils vorzugsweise zwei Lenker.

Bei den hier diskutierten Fügeteilen handelt es sich um Bauteile mit Dickenabmessungen im Bereich von Hundertstel- oder Zehntel-Millimetern. Eine für eine genaue Positionierung hilfreiche möglichst spielfreie Bewegung der beweglichen Schweißelektrode auf die jeweils andere Elektrode zu oder von dieser weg kann durch Ausbildung des zweites Anlenkortes derart erreicht werden, dass vom zweiten Lenkersystem zur Elektrode hin eine in Bewegungsrichtung der Elektrode verlaufende Kraft und, zumindest zeitweise, darüber hinaus in Richtung der zweiten Drehachse verlaufende, einander entgegengesetzte Kräfte übertragbar sind.

Konstruktiv können die einander entgegengesetzten Kräfte in sehr einfacher Art und Weise dadurch hervorgerufen werden, dass der zweite Anlenkort derart ausgebildet ist, dass auf einer Seite: lenkersystemseitig oder elektrodenseitig, ein Vorsprung mit konischer Mantelfläche vorgesehen ist, welche mit einer entsprechend geneigten, vorzugsweise einer komplementär-konischen Begrenzungsfläche einer auf der jeweils anderen Seite vorgesehenen Kopplungs-Ausnehmung zumindest zeitweise in Anlageeingriff steht. Die einander entgegengesetzten Kräfte bewirken eine Verspannung der wenigstens einen beweglichen Elektrode bezüglich des zweiten Lenkersystems, so dass sie im Wesentlichen frei von Seitenabweichungen in der Bewegungsrichtung verlagerbar ist. Je länger dieser Verspannungszustand während einer Verlagerung der beweglichen Elektrode aufrechterhalten werden kann, desto günstiger ist es im Hinblick auf die erzielte Schweißverbindung. Die so verspannte Schweißelektrode kann aufgrund der dadurch im Wesentlichen vermiedenen Seitenabweichungen mit großer Genauigkeit an der Fügestelle angeordnet werden, was wiederum zu einer verbesserten Maßgenauigkeit des Schweißergebnisses führt.

Es ist bekannt, dass Kniegelenkhebel mit zunehmender Bewegungsuntersetzung eine in gleichem Maße ansteigende Kraftübersetzung erreichen. Um das an der Fügestelle angeordnete Fügeteil vor einer Beschädigung oder gar einer Zerstörung durch die auftretenden sehr hohen Kräfte an der Elektrodenwirkfläche zu schützen, kann die Kopplungs-Ausnehmung als Langloch ausgebildet und derart angeordnet sein, dass die Längsrichtung des Langlochs bei einer schweißbereiten Elektrodenstellung im Wesentlichen in Bewegungsrichtung der beweglichen Elektrode verläuft. Bei einer solchen Anordnung ermöglicht das Langloch in der schweißbereiten Elektrodenstellung, d.h. bei Aufliegen der Elektrodenwirkfläche auf dem Fügeteil, dass keine Druckkräfte mehr von dem Hebelsystem auf die Elektrode und damit auf das Fügeteil einwirken.

Darüber hinaus gestattet ein derart ausgebildetes Langloch ein reibungsarmes Setzen der wenigstens einen beweglichen Elektrode während des Schweißens, etwa bewirkt durch ein Abschmelzen von eigens am Bauteil oder am Trägerobjekt vorgesehenen Schweißwarzen.

Die wenigstens eine bewegliche Schweißelektrode kann gemäß einer Weiterbildung der Erfindung linear verschieblich an der Schweißvorrichtung angeordnet sein. Sie kann jedoch auch in der aus dem Stand der Technik bewährten Art und Weise an einer Drehlagerstelle um eine Elektroden-Drehachse drehbar gelagert sein, wobei sie durch einen Schweißelektrodenarm mit der Drehlagerstelle verbunden ist. Durch den Schweißelektrodenarm wird bei ausreichender Schweißelektrodenarmlänge und lediglich geringer Änderung des Schweißspalts eine quasi-lineare Verlagerung der beweglichen Elektrode erreicht, ohne dass eine komplizierte lineare Führung erforderlich ist. Bei dieser Anordnung der beweglichen Elektrode an einem Schweißelektrodenarm ist es für einen reibungsarmen Betrieb besonders günstig, wenn die zweite Drehachse, vorzugsweise auch die erste Drehachse und die Gestell-Drehachse, zur Elektroden-Drehachse im Wesentlichen parallel ist.

Möglicherweise bestehen Schwierigkeiten, den Schweißelektrodenarm derart anzuordnen, dass er andere Vorrichtungsteile der Schweißvorrichtung, insbesondere die Transportvorrichtung, nicht stört. Eine zur Kollisionsvermeidung in Richtung der Elektroden-Drehachse versetzte Anordnung des Schweißelektrodenarms kann unter Umständen zu einer unerwünschten Verwindung des Schweißelektrodenarms um die Längsachse des Schweißelektrodenarms erfolgen. Diese Verwindung kann verhindert werden, wenn der Schweißelektrodenarm zwei in Richtung der Elektroden-Drehachse mit Abstand voneinander angeordnete Träger aufweist. Wichtige Schweißvorrichtungsteile, mit denen eine Kollision vermieden werden soll, können dabei gemäß einer Weiterbildung der Erfindung zwischen den beiden Trägern vorgesehen sein. Aus Gründen symmetriescher Kraft- und Bewegungseinleitung sind die Träger bezüglich der mit ihr verbundenen beweglichen Schweißelektrode vorzugsweise symmetrisch angeordnet. Um eine Relativbewegung der beiden Träger zueinander zu vermeiden, können erfindungsgemäß beide Träger mit einer gemeinsamen Drehwelle drehfest verbunden sein.

Eine für eine positionsgenaue Verlagerung der Schweißelektrode besonders günstige, möglichst symmetrische Krafteinleitung in die Träger kann weiterhin dadurch erfolgen, dass je ein Lenker des zweiten Lenkersystems an je einem Träger um die zweite Drehachse drehbar angelenkt ist.

Die Kraftquelle der Schweißvorrichtung kann gemäß einer vorteilhaften Alternative der vorliegenden Erfindung eine doppelt wirkende Kraftquelle sein, so dass mit ihr die Schweißelektroden aufeinander zu und voneinander wegbewegt werden können. Häufig sind die hier beschriebenen Schweißvorrichtungen jedoch Teil einer größeren Anlage, welche getaktet arbeitet, wobei der Takt von Exzenternocken als Kraftquellen vorgegeben wird. Durch Derartige Nocken können ohne unerwünschte komplizierte Maßnahmen, wie etwa das Vorsehen von Eingriffsnuten, nur Kräfte in einer Richtung übertragen werden. In einem solchen Falle ist es günstig, wenn die Schweißvorrichtung ein Kraftelement aufweist, welches die bewegliche Elektrode in einer Richtung: Schweißspaltweitenvergrößerung oder Schweißspaltweitenverkleinerung, mit Kraft beaufschlagt, um die nötige Kraft für eine Veränderung der Schweißspaltweite in dieser Richtung bereitzustellen. Um gegen die Beaufschlagung durch das Kraftelement eine Veränderung der Schweißspaltweite in der jeweils entgegengesetzten Richtung erreichen zu können, ist das Kraftelement durch die Kraftquelle überwindbar.

Da eine mit der Bewegungsuntersetzung des Hebelmechanismus einhergehende Kraftübersetzung nicht genutzt werden soll, kann die Kraftquelle grundsätzlich auch am zweiten Lenkersystem zur Kraft- und Bewegungseinleitung angreifen. Aus Gründen der einfacheren Anordnung der Kraftquelle an der Schweißvorrichtung sind jedoch eine Kraft- und Bewegungseinleitung durch die Kraftquelle in das erste Lenkersystem bevorzugt. Um sämtliche die Spaltweite verändernden Kraftangriffe möglichst nahe beieinander vorzusehen, was auch im Hinblick auf eine Auslegung des Systems vorteilhaft ist, kann das Kraftelement ebenfalls an einem der Lenkersysteme, aufgrund der günstigeren Bewegungsverhältnisse vorzugsweise am ersten Lenkersystem, kraftübertragend angreifen.

Eine günstige räumliche Trennung von Kraft- bzw. Bewegungseinleitung in das erste Lenkersystem und Kraft- bzw. Bewegungsableitung vom ersten in das zweite Lenkersystem kann gemäß einer Weiterbildung der Erfindung erreicht werden, wenn das erste Lenkersystem wenigstens einen Winkellenker mit zwei einen vorbestimmten Winkel einschließenden Schenkeln umfasst, wobei der eine Schenkel einen Krafteinleitungsbereich zur Einleitung von Kraft der Kraftquelle sowie einen Angriffsort des Kraftelements aufweist und wobei am zweiten Schenkel der erste Anlenkort zur Anlenkung des zweiten Lenkersystems ausgebildet ist.

Da bei Vorsehen eines wie oben definierten Langlochs im schweißbereiten Zustand der Elektroden keine Kraft vom Hebelmechanismus auf die Elektrode übertragen werden kann, ist es zur Sicherstellung einer definierten Andruckkraft der Elektrode an das Fügeteil vorteilhaft, wenn auf die bewegliche Elektrode, vorzugsweise auf einen mit ihr verbundenen Schweißelektrodenarm, zumindest in der Schweißbereitschaftsstellung eine in Richtung einer Schweißspaltverringerung wirkende Kraft einwirkt. Im einfachsten Fall kann diese Kraft die auf die Elektrode wirkende Schwerkraft sein. Hierzu reicht es aus, die wenigstens eine bewegliche Elektrode derart anzuordnen, dass ihre Schwerkraft in Richtung einer Schweißspaltverkleinerung wirkt. Eine größere konstruktive Gestaltungsfreiheit erreicht man jedoch dann, wenn die Schweißvorrichtung ein Kraftgerät umfasst, welche eine in Richtung der Schweißspaltverkleinerung wirkende Kraft auf die bewegliche Elektrode, vorzugsweise auf den Schweißelektrodenarm, ausübt. In diesem Falle ist eine beliebig orientierte Anordnung der Elektrode möglich.

Die vorliegende Erfindung wird im Folgenden anhand der beiliegenden Figuren näher erläutert werden. Es stellt dar:
- Fig. 1: eine Querschnittsansicht einer erfindungsgemäßen Schweißvorrichtung mit einer Transportvorrichtung sowie mit einer Elektrodenschließmechanik zum definierten Heben und Senken einer beweglichen Schweißelektrode,
- Fig. 2: einen die Transportvorrichtung und die Elektrodenschließmechanik umfassenden vergrößerten Ausschnitt von Fig. 1,
- Fig. 3: eine Schnittansicht entlang der Linie V-V in Fig. 2,
- Fig. 4: eine Schnittansicht entlang Linie VI-VI von Fig. 2,
- Fig. 5a - 5d: eine schematische Darstellung unterschiedlicher Stellungen der Schweißelektroden, des Hebelmechanismus und der mit diesem verbundenen Bauteile während einer Schließbewegung der beweglichen Schweißelektrode.

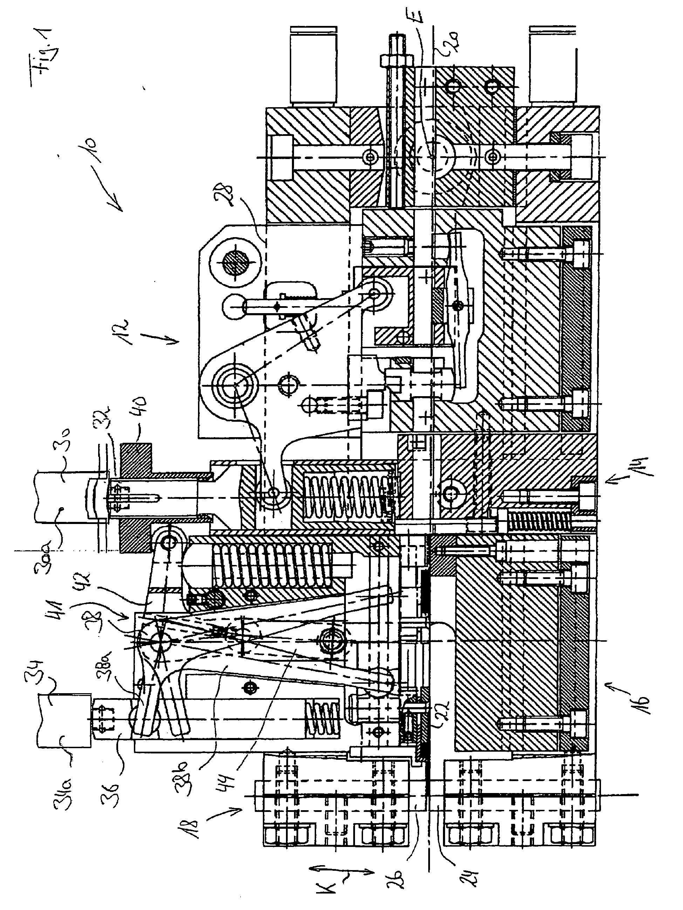

In Fig. 1 ist eine Schweißanlage allgemein mit 10 bezeichnet. Die Schweißanlage 10 umfasst eine Kontaktband-Vorschubeinheit 12, eine Kontaktteil-Abtrenneinheit 14, eine Transportvorrichtung 16 sowie eine Schweißvorrichtung 18.

Ein in Fig. 1 lediglich durch Strichlinierung angedeutetes Kontaktband 20 läuft in der Zeichenebene der Fig. 1 von der Kontaktband-Vorschubeinheit 12 getaktet angetrieben zur Kontaktteil-Abtrenneinheit 14. In der Kontaktteil-Abtrenneinheit 14 werden durch Abscheren vom Kontaktband Kontaktteile definierter Länge abgetrennt. Diese Kontaktteile werden in der Transportvorrichtung 1 6 von einer Baugruppe 22 umfassend eine Halteund eine Löseeinrichtung in einer Halteeinrichtung-Aufnahmestellung aufgenommen und zu einer Halteeinrichtung-Abgabestellung transportiert.

Die Schweißvorrichtung 18 umfasst eine bezüglich eines Vorrichtungsgestells der Schweißvorrichtung ortsfeste untere Schweißelektrode 24 und eine um eine Elektroden-Drehachse E drehbare bewegliche Schweißelektrode 26. Die bewegliche Schweißelektrode 26 ist über einen Schweißelektrodenarm 28 mit der Drehlagerung um die Elektroden-Drehachse E verbunden und in Richtung des Doppelpfeils K auf die Elektrode 24 zu und von dieser weg bewegbar. Der Schweißelektrodenarm 28 ist nur abschnittsweise, zum Teil durch Strichlinierung, dargestellt.

Der Takt für die Kontaktband-Vorschubeinheit 12 sowie für das Heben und Senken der beweglichen Schweißelektrode 26 wird über einen angedeuteten ersten Exzenternocken 30 auf einen durch Federkraft an der Exzenternocken-Mantelfläche 30a anliegenden ersten Stößel 32 übertragen.

Ebenso wird ein Takt zur Bewegung der Transportvorrichtung 16 über einen zweiten Exzenternocken 34 auf einen durch Federkraft an der Exzenternocken-Mantelfläche 34a anliegenden zweiten Stößel 36 übertragen. In dem zweiten Stößel 36 ist der kurze Schenkel 38a eines L-förmigen Hebels 38 drehbar gelagert, dessen langer Schenkel 38b eine Verschiebebewegung der Baugruppe 22 bei Auf- und Abbewegung des zweiten Stößels 36 bewirkt. Die Baugruppe 22 oder ein mit ihr drehfest verbundenes Bauteil umfasst einen Zahnteilkreis, welcher während der Verschiebebewegung auf einer Zahnstange abwälzt, so dass die Baugruppe 22 eine kombinierte Verschiebe- und Drehbewegung ausführt. Dies erlaubt die Überwindung großer Strecken zwischen Halteeinrichtung-Aufnahmestellung und Halteeinrichtung-Abgabestellung. Die Kinematik der Baugruppe 22 beim Übergang von der Halteeinrichtung-Aufnahmestellung zur Halteeinrichtung-Abgabestellung und umgekehrt ist in der DE 197 55 166 A1, deren Offenbarung Teil der vorliegenden Anmeldung sein soll, ausführlich beschrieben.

Vom ersten Stößel 32 wird über eine Tellermutter 40 Bewegung auf ein erstes Lenkersystem 42 übertragen. Vom ersten Lenkersystem 42 wird über ein zweites Lenkersystem 44 die Bewegung zum Schweißelektrodenarm 28 übertragen.

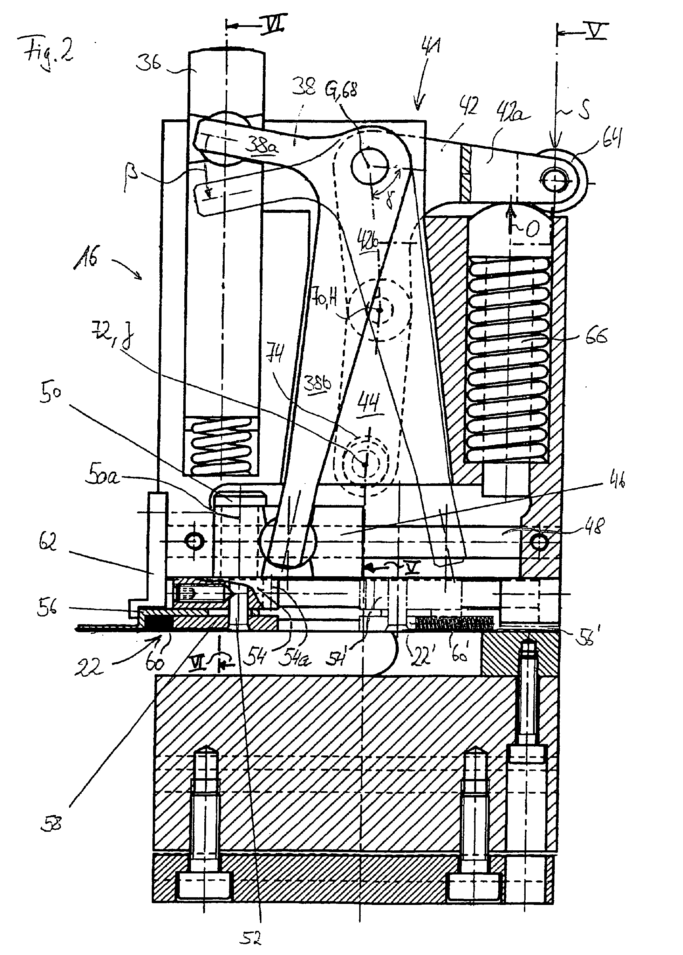

Eine genauere Beschreibung ist der Fig. 2 zu entnehmen. Zunächst wird jedoch die Transportvorrichtung 16 zur Beschickung der Schweißvorrichtung 18 mit zu fügenden Bauteilen (Fügeteilen) beschrieben.

Ein Längsende des langen Schenkels 38b des L-förmigen Hebels 38 ist drehbar in einem Verschiebeelement 46 aufgenommen, welches längs einer parallel zur Zeichenebene der Fig. 2 angeordneten Führungsstange 48 verschieblich angeordnet ist. Über einen Verbindungsbolzen 50 und einen Verbindungsniet 52, welcher drehfest mit dem drehbar im Verschiebeelement 46 gelagerten Verbindungsbolzen 50 verbunden ist, sind die Baugruppe 22 und ein Abwälzteil 54 mit dem Verschiebeelement 46 verbunden. Die Baugruppe 22, umfassend die Halteeinrichtung 56 sowie die Löseeinrichtung 58, und das Abwälzteil 54 sind zur gemeinsamen Bewegung miteinander verbunden.

In Fig. 2 ist die Baugruppe 22, das Abwälzteil 54 und das Verschiebeelement 46 in ausgezogenen Linien am linken Rand der Transportvorrichtung 16 in der Halteeinrichtung-Abgabestellung dargestellt. Dagegen ist die Halteeinrichtung 56' bzw. die Baugruppe 22' zusammen mit dem Abwälzteil 54' strichliniert in der Halteeinrichtung-Aufnahmestellung gezeigt, in welcher von der Halteeinrichtung 56 ein Fügeteil zum Transport in die Halteeinrichtung-Abgabestellung aufgenommen wird.

Zur Überwindung größerer Abstände erfolgt der Übergang von der Halteeinrichtung-Abgabestellung in die Halteeinrichtung-Aufnahmestellung und umgekehrt wie folgt:

Ausgehend von der in Fig. 2 mit durchgezogenen Linien dargestellten Halteeinrichtung-Abgabestellung wird durch Niederdrücken des Stößels 36 der L-förmige Hebel um einen Winkel β gegen den Uhrzeigersinn verdreht. Von dem Längsende des langen Schenkels 38b wird das Verschiebeelement 46 längs der Führungsstange 48 nach rechts mitgenommen. Das Abwälzteil 54, an dessen von der Halteeinrichtung 56 wegweisendem Längsende 54a ein Verzahnungsteilkreis ausgebildet ist, wird zunächst linear nach rechts verschoben, bis die Verzahnung in Eingriff mit einer in Fig. 2 nicht dargestellten Zahnstange gelangt. Ab Herstellung des Verzahnungseingriffs erfolgt eine Verschiebebewegung der Baugruppe 22 und des Abwälzteils 54 zusammen mit dem Verschiebeelement 46, der eine Schwenkbewegung um 180° um die zentrale Achse 50a des Verbindungsbolzens 50 herum überlagert ist. Nach der Drehung um 180° gelangt die Verzahnung am Abwälzteil 54 außer Eingriff mit der Zahnstange, woraufhin die Halteeinrichtung 56 und mit dieser die Löseeinrichtung 58, das Abwälzteil 54 und das Verschiebeelement 46 eine lineare Bewegung in die Halteeinrichtung-Aufnahmestellung ausführen. Die Transportbewegung des Bauteils, d. h. die Bewegung der Halteeinrichtung 56 von der Halteeinrichtung-Aufnahmestellung in die Halteeinrichtung-Abgabestellung folgt dem Ablauf in umgekehrter Reihenfolge.

Wie in Fig. 2 gezeigt ist, umfasst die Baugruppe 22 weiterhin eine Vorspann-Druckfeder 60, welche die Halteeinrichtung 56 bezüglich der Löseeinrichtung 58 in eine Stellung vorspannt, in welcher die Löseeinrichtung 58 bezüglich der Halteeinrichtung 56 zurückgezogen ist.

Weiterhin ist in Fig. 2 ein Hebelmechanismus 41 zum Anheben und Absenken des Schweißelektrodenarms 28 dargestellt. Der Schweißelektrodenarm 28 selbst ist in Fig. 2 nicht gezeigt. Wie aus Fig. 1 hervorgeht, wirkt durch die Tellermutter 40 eine Schließkraft S auf eine Rolle 64, welche drehbar an einem ersten Schenkel 42a des ersten Lenkersystems 42 angeordnet ist. Auf den ersten Schenkel 42a wirkt darüber hinaus die Öffnungskraft O in entgegengesetzter Richtung ein. Die Öffnungskraft O wird erzeugt durch Zusammendrücken der Schweißspalt-Öffnungsdruckfeder 66. Die Schweißspalt-Öffnungsdruckfeder 66 ist in ihrer Federhärte derart gewählt, dass sie den Schweißelektrodenarm 28 heben kann, jedoch durch den ersten Exzenternocken 30 zusammendrückbar ist.

Das erste Lenkersystem ist um eine ortsfeste bzw. Transportvorrichtungsgestellfeste Gestell-Drehachse G drehbar an einem fixen Anlenkort 68 am Vorrichtungsgestell angelenkt.

Am Längsende eines zweiten Schenkels 42b, welcher einen Winkel *y* mit dem ersten Schenkel 42a einschließt, ist an einem ersten Anlenkort 70 um eine erste Drehachse H drehbar das zweite Lenkersystem 44 angelenkt.

An dem dem ersten Anlenkort 70 gegenüberliegenden Längsende des zweiten Lenkersystems 44 ist an einem zweiten Anlenkort 72 das zweite Lenkersystem 44um eine zweite Drehachse J drehbar mit der in Fig. 2 nicht dargestellten beweglichen Elektrode 62 verbunden. Am zweiten Anlenkort 72 ist im zweiten Lenkersystem 44 ein Langloch 74 ausgebildet, auf welches weiter unten erläuternd eingegangen wird. Alternativ kann das Langloch 74 auch am Schweißelektrodenarm 28 ausgebildet sein, an welchem das zweite Lenkersystem 44 am zweiten Anlenkort 72 unmittelbar angelenkt ist.

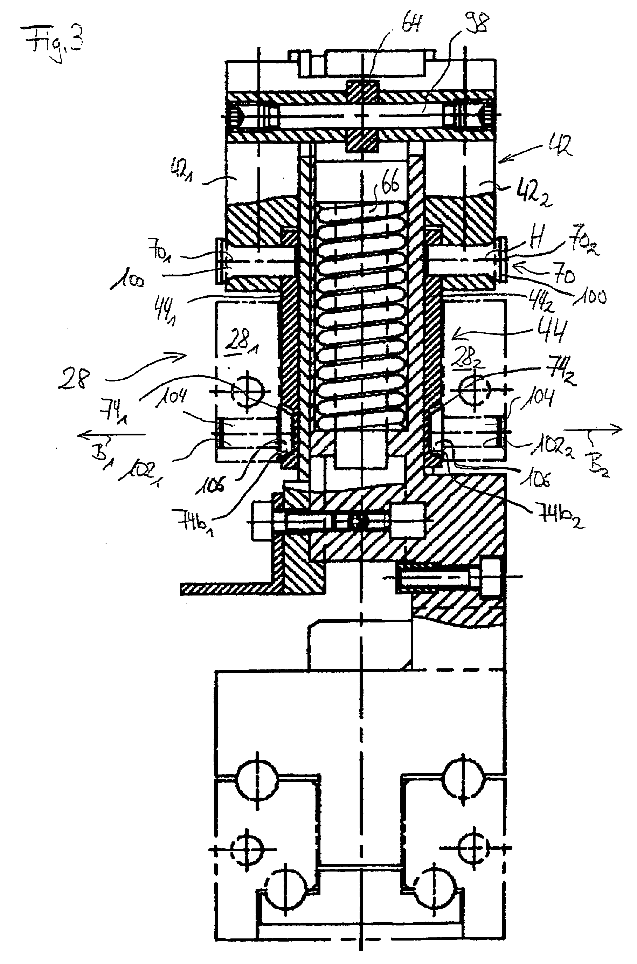

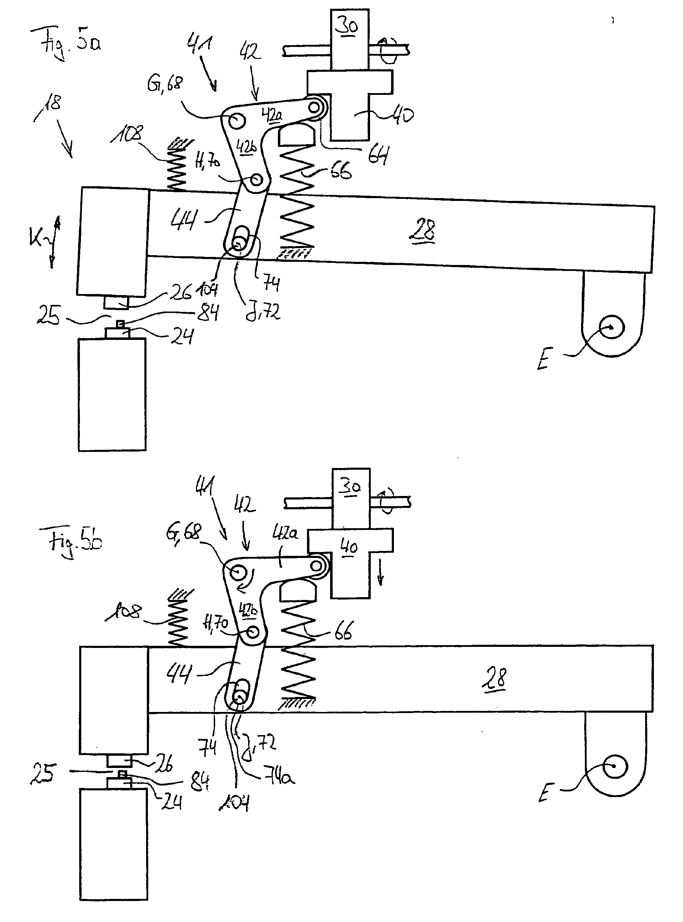

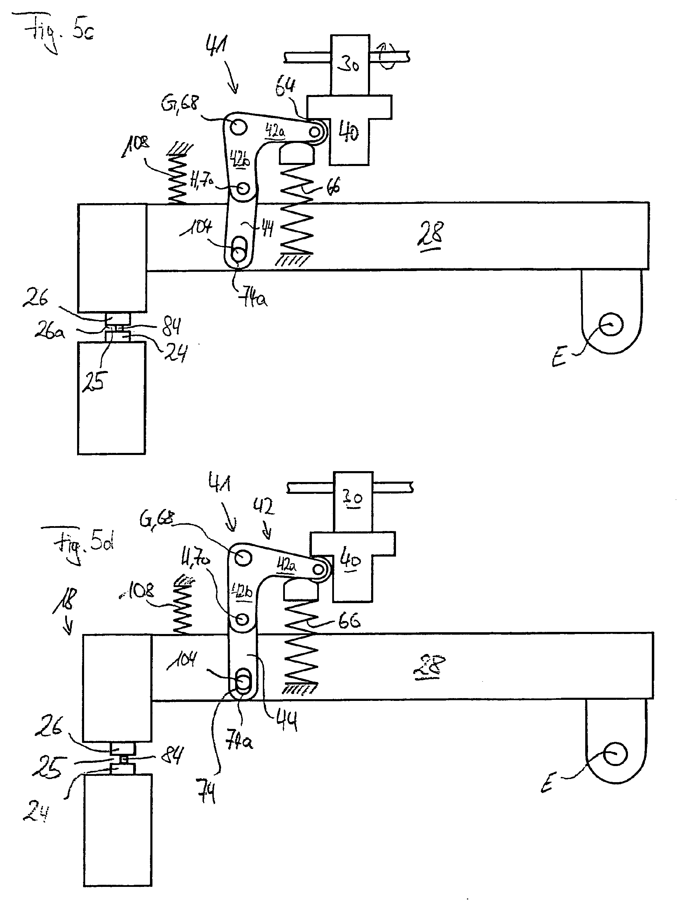

In Fig. 3 ist ein Schnitt entlang der Linie V-V in Fig. 2 dargestellt. In Fig. 5 ist sowohl die Schweißspalt-Öffnungsdruckfeder 66 und ihr Federwiderlager als auch das erste und zweite Lenkersystem 42 bzw. 44 geschnitten dargestellt.

Das erste Lenkersystem 42 besteht aus zwei Lenkern 42₁ und 42₂, welche über eine gemeinsame Traverse 98 miteinander verbunden sind. An der Traverse 98 ist drehbar die Rolle 64 abgestützt.

Am Anbringungsort 70 sind die Lenker 42₁ und 42₂ des ersten Lenkersystems 42 um die erste Drehachse H drehbar mit dem zweiten Lenkersystem 44 verbunden.

Das zweite Lenkersystem 44 umfasst ebenfalls einen ersten Lenker 44₁ und einen zweiten Lenker 44₂. Dabei ist der erste Lenker 44₁ des zweiten Lenkersystems an den Lenker 42₁ des ersten Lenkersystems 42 angelenkt, weiterhin ist der zweite Lenker 44₂ des zweiten Lenkersystems an den Lenker 42₂ des ersten Lenkersystems 42 angelenkt. Durch die starre Kopplung der Lenker 42₁ und 42₂ mit der gemeinsamen Traverse 98 weisen beide erste Anlenkstellen 70₁ und 70₂ eine gemeinsame erste Drehachse H auf. Die Anlenkung des zweiten Lenkersystsems 44 am ersten Lenkersystem 42 erfolgt durch Bolzen 100, welche eine Relativdrehung zwischen erstem und zweitem Lenkersystem gestatten.

Der Schweißelektrodenarm 28 ist in dem hier dargestellten Beispiel gebildet durch zwei im Wesentlichen parallel zueinander verlaufende Träger 28₁ und 28₂, welche mit einer gemeinsamen, nicht dargestellten Drehwelle verbunden sind und ohne die Möglichkeit einer Relativdrehung zueinander um die Elektroden-Drehachse E drehen. In Durchgangsöffnungen 102₁ und 102₂ in den Trägern 28₁ und 28₂ sind die Schäfte von Kegelkopfnieten 104 aufgenommen. Der Kegelkopf 106 der Kegelkopfniete 104 weist einen kegelstumpfförmigen Kopf auf, welcher sich in das Langloch 74 des zweiten Lenkersystems 44 hineinerstreckt. Die Langlöcher sind ebenfalls mit tiefgestellten Zahlen gekennzeichnet, um die Zuordnung zu den jeweiligen Lenkern des zweiten Lenkersystems 44 zu kennzeichnen. Die Langlöcher 74₁ und 74₂ des zweiten Lenkersystems 44 weisen entsprechend dem Kegelöffnungswinkel des Kegelkopfes 106 geneigte Seitenflächen 74b₁ und 74b₂ auf, an denen die Mantelfläche des Kegelkopfes 106 anliegt. Durch diese konstruktive Gestaltung wird erreicht, dass dann, wenn die Träger 28₁ und 28₂ des Schwenkarms 28 über die Kegelköpfe 106 an den geneigten Seitenflächen 74b₁ und 74b₂ der Langlöcher 74 anliegen, nicht nur eine Kraft in Bewegungsrichtung der Schweißelektrode 26, sondern auch eine Kraft in Richtung der Pfeile B₁ und B₂ auf die jeweiligen Träger 28₁ und 28₂ übertragen wird, so dass die Träger 28₁ und 28₂ unter der Krafteinwirkung voneinander weggedrückt und verspannt werden, was ein im Wesentlichen spielfreies Verlagern der Träger gestattet. Dies gestattet eine sehr genaue Positionierung der Schweißelektrode.

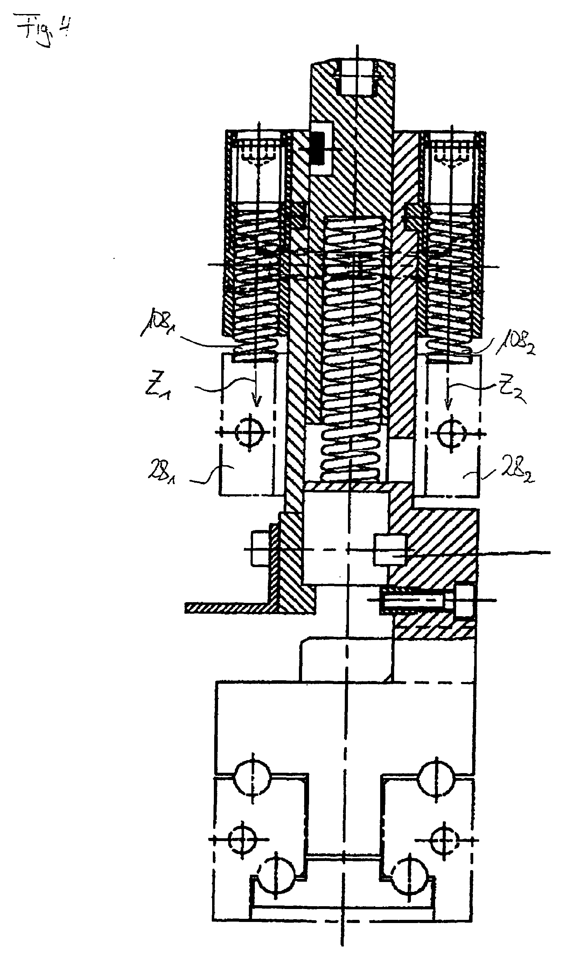

In Fig. 4 ist ein Schnitt entlang der Linie VI-VI in Fig. 2 dargestellt. Dabei interessiert im Wesentlichen lediglich die Kraftbeaufschlagung der Träger 28₁ und 28₂ durch Schweißspalt-Schließdruckfedern 108₁ und 108₂. Von diesen Schweißspalt-Schließdruckfedern 108₁ und 108₂ übt jede eine Kraft Z₁ bzw. Z₂ auf den ihr jeweils zugeordneten Träger 28₁ bzw. 28₂ aus, was eine definierte Schließkraft in der schweißbereiten Stellung der Schweißvorrichtung gewährleistet.

In den Figuren 5a bis 5d ist schematisch vereinfacht der Bewegungsablauf des Hebelmechanismus 41, der Elektroden 24 und 26 sowie damit verbundener Teile dargestellt. Die Bewegung des Hebelmechanismus 41 und des Schwenkarms 28 ist in den Figuren 5a bis 5d zur besseren Wahrnehmung überzeichnet dargestellt.

In Fig. 5a ist die Schweißvorrichtung 18 geöffnet, d.h. mit großer Schweißspaltweite dargestellt. Im Schweißspalt 25 ist ein Bauteil 84 angeordnet.

Durch Drehung des ersten Exzenternockens 30 wird nun der erste Schenkel 42a des ersten Lenkersystems 42 gegen die Vorspannkraft der Schweißspalt-Öffnungsdruckfeder 66 in Fig. 7b nach unten gedrückt, was zu einer Drehung des ersten Lenkersystems 42 um die Gestell-Drehachse G im Uhrzeigersinn führt. Der erste Anlenkort 70 schwenkt ebenfalls im Uhrzeigersinn um die Gestell-Drehachse G, was unter der Einwirkung der Schweißspalt-Schließdruckfeder 108 zu einer Streckung des Hebelmechanismus 41 führt (siehe Fig. 5b). Die Druckkraft der Schweißspalt-Schließdruckfeder 108 führt dazu, dass der Kegelkopfniet 104 am Langlochgrund 74a anliegt.

In Fig. 5c ist eine Stellung erreicht, bei der die Elektrodenwirkfläche 26a auf dem Bauteil 84 aufliegt, so dass ein weiteres Schließen des Schweißspalts 25 durch das Bauteil 84 mechanisch gehemmt ist. Die Schweißspalt-Schließdruckfeder 108 sorgt immer noch für ein Anliegen des Kegelkopfniets 104 am Langlochgrund 74a.

In Fig. 5d ist die Schweißvorrichtung 18 in einer vollständig schweißbereiten Stellung gezeigt. Der Hebelmechanismus 41 befindet sich in gestrecktem Zustand, was aufgrund der Bewegungshemmung in Schließrichtung des Schweißelektrodenarms 28 durch das Bauteil 84 bewirkt, dass der Kegelkopfniet 104 nicht mehr am Langlochgrund 74a aufliegt und in Bewegungsrichtung der Elektrode 26 vom Hebelmechanismus 41 keine Kraft auf den Schweißelektrodenarm 28 übertragen werden kann. Da die Kraft der Schweißspalt-Öffnungsdruckfeder 66 durch den ersten Exzenternocken 30 und die Tellermutter 40 überwunden ist, bestimmt alleine die Schweißspalt-Schließdruckfeder 108 die auf das Bauteil 84 durch die bewegliche Elektrode 26 ausgeübte Kraft. Diese Gestaltung der vollständig schweißbereiten Stellung hat den weiteren Vorteil, dass ein reibungsarmes Setzen des Schweißelektrodenarms 28 beim Schweißen möglich ist. Ist nämlich das Bauteil 84 mit Schweißwarzen versehen, welche während eines Schweißvorgangs abschmelzen sollen, so ist aufgrund des zwischen dem Kegelkopfniet 104 und dem Langlochgrund 74a vorhandenen Spiels ein Setzen des Schweißelektrodenarms 28 möglich, so dass der Kontakt zwischen der Schweißelektrode 26 und dem Bauteil 84 nicht abreißt. Dies ermöglicht einen bis zum Ende des Schweißvorgangs definierten Kontaktübergang.

Wenn in der vorliegenden Anmeldung eine Anordnung oder eine Anordnungsbeziehung zwischen Bauteilen mit "im Wesentlichen" beschrieben ist, so soll dies zum Ausdruck bringen, dass eine Abweichung im Rahmen der üblichen Fertigungstoleranzen zugelassen sein soll.

## Patentansprüche

1. Schweißvorrichtung, umfassend:
- eine Kraftquelle (30),
- einen die Kraft der Kraftquelle (30) übertragenden Kraftübertragungsmechanismus (41), und
- wenigstens zwei einander im Wesentlichen gegenüberliegende, einen Schweißspalt (25) zwischen sich definierende Schweißelektroden (24, 26), von welchen wenigstens eine Elektrode (26) durch eine von der Kraftquelle (30) bereitgestellte Kraft mittels des Kraftübertragungsmechanismus (41) zur Veränderung der Schweißspaltweite in Richtung (K) zu der anderen Elektrode hin und von dieser weg bewegbar ist,
wobei die Schweißvorrichtung (18) wenigstens einen Hebelmechanismus (41) als den Kraftübertragungsmechanismus (41) umfasst, wobei der Hebelmechanismus (41) ein erstes Lenkersystem (42) aufweist, welches um eine Erstes-Lenkersystem-Drehachse drehbar ist, und
wobei der Hebelmechanismus (41) weiterhin ein zweites Lenkersystem (44) aufweist, welches an einem ersten Anlenkort (70) an dem ersten Lenkersystem (42) um eine erste Drehachse (H) drehbar angelenkt und an einem zweiten Anlenkort (72) um eine zweite Drehachse (7) drehbar mit der beweglichen Elektrode (26) verbunden ist,
**dadurch gekennzeichnet, dass** das erste Lenkersystem (42) an einem bezüglich ruhender Vorrichtungsteile fixen Anlenkort (68) um eine Gestell-Drehachse (G) als die Erstes-Lenkersystem-Drehachse drehbar ist und dass ferner das zweite Lenkersystem (44) eine Mehrzahl von Lenkern (44₁, 44₂) umfasst, welche im Wesentlichen eine gemeinsame erste (H) und eine gemeinsame zweite Drehachse (J) aufweisen und in Richtung der zweiten Drehachse (J) mit Abstand voneinander angeordnet sind.

2. Schweißvorrichtung nach Anspruch 1,
**dadurch gekennzeichnet, dass** das zweite Lenkersystem (44) zwei Lenker (44₁, 44₂) umfasst.

3. Schweißvorrichtung nach einem der Ansprüche 1 oder 2,
**dadurch gekennzeichnet, dass** der zweite Anlenkort (72) derart ausgebildet ist, dass vom zweiten Lenkersystem (44) zur Elektrode (26) hin eine in Bewegungsrichtung (W) der Elektrode verlaufende Kraft und, zumindest zeitweise, in Richtung der zweiten Drehachse (J) verlaufende, einander entgegengesetzte Kräfte (B₁, B₂) übertragbar sind.

4. Schweißvorrichtung nach Anspruch 3,
**dadurch gekennzeichnet, dass** der zweite Anlenkort (72) derart ausgebildet ist, dass auf einer Seite: lenkersystemseitig oder elektrodenseitig, ein Vorsprung (106) mit konischer Mantelfläche vorgesehen ist, welche mit einer entsprechend geneigten, vorzugsweise einer komplementär-konischen Begrenzungsfläche (74b₁, 74b₂) einer auf der jeweils anderen Seite vorgesehenen Kopplungs-Ausnehmung (74) zumindest zeitweise in Anlageeingriff steht.

5. Schweißvorrichtung nach Anspruch 4,
**dadurch gekennzeichnet, dass** die Kopplungs-Ausnehmung (74) als Langloch (74) ausgebildet und derart angeordnet ist, dass die Längsrichtung des Langlochs (74) bei einer schweißbereiten Elektrodenstellung im Wesentlichen in Bewegungsrichtung (W) der beweglichen Elektrode (26) verläuft.

6. Schweißvorrichtung nach Anspruch 5,
**dadurch gekennzeichnet, dass** der Hebelmechanismus (41) und das Langloch (74) derart bemessen sind, dass in einem schweißbereiten Zustand der Schweißvorrichtung und in einem gestreckten Zustand der Lenkersysteme die bewegliche Elektrode (26) im Wesentlichen ohne Krafteinwirkung durch den Hebelmechanismus auf einem Fügeteil (84) in der Schweißstelle aufliegt.

7. Schweißvorrichtung nach einem der vorhergehenden Ansprüche,
**dadurch gekennzeichnet, dass** die bewegliche Elektrode (26) an einer Drehlagerstelle (bei E) um eine Elektroden-Drehachse (E) drehbar gelagert ist, wobei sie durch einen Schweißelektrodenarm (28) mit der Drehlagerstelle (bei E) verbunden ist.

8. Schweißvorrichtung nach Anspruch 7,
**dadurch gekennzeichnet, dass** der Schweißelektrodenarm (28) zwei in Richtung der Elektroden-Drehachse (E) mit Abstand voneinander angeordnete Träger (28₁, 28₂) aufweist.

9. Schweißvorrichtung nach Anspruch 8 unter Rückbeziehung auf Anspruch 2,
**dadurch gekennzeichnet, dass** je ein Lenker (44₁, 44₂) des zweiten Lenkersystems (44) an je einem Träger (28₁, 28₂) um die zweite Drehachse (J) drehbar angelenkt ist.

10. Schweißvorrichtung nach einem der vorhergehenden Ansprüche,
**dadurch gekennzeichnet, dass** sie ein Kraftelement (66) aufweist, welches die bewegliche Elektrode durch die Kraftquelle überwindbar in einer der Richtungen (O): Richtung einer Schweißspaltweitenvergrößerung (O) oder einer Schweißspaltweitenverringerung (S), mit Kraft (O) beaufschlagt.

11. Schweißvorrichtung nach Anspruch 10,
**dadurch gekennzeichnet, dass** das Kraftelement (66) an einem der Lenkersysteme (42, 44), vorzugsweise am ersten Lenkersystem (42) kraftübertragend angreift.

12. Schweißvorrichtung nach Anspruch 10 oder 11,
**dadurch gekennzeichnet, dass** das erste Lenkersystem (42) wenigstens einen Winkellenker (42) mit zwei einen vorbestimmten Winkel (*y*) einschließenden Schenkeln (42a, 42b) umfasst, wobei der eine Schenkel (42a) einen Krafteinleitungsbereich (bei 64) zur Einleitung von Kraft der Kraftquelle (30) sowie einen Angriffsort (bei D) des Kraftelements (66) aufweist und wobei am zweiten Schenkel (42b) der erste Anlenkort (70) zur Anlenkung des zweiten Lenkersystems (44) ausgebildet ist.

13. Schweißvorrichtung nach einem der vorhergehenden Ansprüche, vorzugsweise unter Rückbeziehung auf einen der Ansprüche 7 bis 9,
**dadurch gekennzeichnet, dass** sie ein Kraftgerät (108) umfasst, welche eine in Richtung der Schweißspaltverkleinerung wirkende Kraft (Z₁, Z₂) auf die bewegliche Elektrode (26), vorzugsweise auf den Schweißelektrodenarm (28), ausübt.

## Claims

1. A welding apparatus, comprising:
- a power source (30),
- a force-transmitting mechanism (41) transmitting the force of the power source (30), and
- at least two substantially opposing welding electrodes (24,26) which define between them a welding gap (25) and of which at least one electrode (26) can be moved towards and away from the other electrode by a force provided by the power source (30) by means of the force-transmitting mechanism (41) so as to vary the welding gap width in direction (K),
wherein the welding apparatus (18) comprises at least one lever mechanism (41) as the force-transmitting mechanism (41), wherein the lever mechanism (41) has a first link system (42) which can rotate about a first link system axis of rotation, and
wherein the lever mechanism (41) also has a second link system (44) which is rotatably articulated at a first mounting point (70) on the first link system (42) about a first pivot axis (H), and at a second mounting point (72) is connected with the movable electrode (26) so as to be rotatable about a second pivot axis (7),
**characterised in that** the first link system (42) is rotatable at a mounting point (68), which is fixed relative to stationary apparatus parts, about a frame pivot axis (G) as the first link system pivot axis, and **in that** also the second link system (44) comprises a plurality of links (44₁,44₂) which essentially have a common first pivot axis (H) and a common second pivot axis (J),
and which are arranged spaced apart in the direction of the second pivot axis (J).

2. A welding apparatus according to Claim 1,
**characterised in that** the second link system (44) comprises two links (44₁, 44₂).

3. A welding apparatus according to Claim 1 or 2, **characterised in that** the second mounting point (72) is designed so that from the second link system (44) towards the electrode (26) a force is transmitted extending in the movement direction (W) of the electrode and, at least temporarily, mutually opposing forces (B₁,B₂) extending in the direction of the second pivot axis (J) are transmitted.

4. A welding apparatus according to Claim 3,
**characterised in that** the second mounting point (72) is designed so that on one side: on the link system side or on the electrode side, a projection (106) is provided with a conical circumferential surface which at least temporarily is in mating engagement with a correspondingly inclined, preferably complementary conical boundary surface (74b₁, 74b₂) of a coupling recess (74) provided on the respective other side.

5. A welding apparatus according to Claim 4,
**characterised in that** the coupling recess (74) is in the form of a slot (74) and is arranged so that the longitudinal direction of the slot (74) extends, in an electrode position ready for welding, substantially in the movement direction (W) of the movable electrode (26).

6. A welding apparatus according to Claim 5,
**characterised in that** the lever mechanism (41) and the slot (74) are of such dimensions that in a position of the welding apparatus ready for welding and in an extended position of the link systems the movable electrode (26) bears on a component to be joined (84) at the welding point substantially without force being applied by the lever mechanism.

7. A welding apparatus according to any one of the preceding Claims,
**characterised in that** the movable electrode (26) is rotatably mounted at a pivot mounting point (at E) about an electrode pivot axis (E), wherein it is connected to the pivot mounting point (at E) by a welding electrode arm (28).

8. A welding apparatus according to Claim 7,
**characterised in that** the welding electrode arm (28) has two supports (28₁,28₂) spaced apart in the direction of the electrode pivot axis (E).

9. A welding apparatus according to Claim 8, with reference to Claim 2,
**characterised in that** a respective link (44₁,44₂) of the second link system (44) is rotatably articulated to a respective support (28₁, 28₂) about the second pivot axis (J).

10. A welding apparatus according to any one of the preceding Claims,
**characterised in that** it has a force element (66) which acts with a force (O) on the movable electrode, which can be overcome by the power source, in one of the directions (O): direction of a welding gap enlargement (0) or of a welding gap reduction (S).

11. A welding apparatus according to Claim 10, **characterised in that** the force element (66) acts in a force-transmitting manner on one of the link systems (42,44), preferably on the first link system (42).

12. A welding apparatus according to Claim 10 or 11,
**characterised in that** the first link system (42) comprises at least one angular link (42) with two arms (42a,42b) forming a predetermined angle (*y*), wherein one arm (42a) has a force-transfer zone (at 64) for the transfer of force from the power source (30), and it also has an engagement point (at D) of the force element (66), and wherein on the second arm (42b) the first mounting point (70) is designed for the articulation of the second link system (44).

13. A welding apparatus according to any one of the preceding Claims, preferably with reference to one of Claims 7 to 9,
**characterised in that** it comprises a power appliance (108) which exerts a force (Z₁, Z₂), which acts in the direction of the welding gap reduction, on the movable electrode (26), preferably on the welding electrode arm (28).

## Revendications

1. Dispositif de fermeture comprenant :
- une source d'effort (30),
- un mécanisme de transmission d'effort (41) transmettant l'effort à la source d'effort (30), et
- au moins deux électrodes de soudure (24, 26) principalement opposées l'une à l'autre définissant un espace de soudage (25) entre elles, par lesquelles au moins une électrode (26) peut être déplacée dans un mouvement de va-et-vient dans la direction (K) de l'autre électrode par une force fournie par la source d'effort (30) au moyen du mécanisme de transmission d'effort (41) afin de modifier la largeur de l'espace de soudage,
le dispositif de fermeture (18) comprenant au moins un mécanisme de levage (41) comme mécanisme de transmission d'effort (41), le mécanisme de levage (41) présentant un premier système de direction (42), lequel peut pivoter autour d'un axe de rotation du premier système de direction, et
le mécanisme de levage (41) présentant de plus un second système de direction (44), lequel est articulé de manière à pouvoir pivoter autour d'un premier axe de rotation (H) au niveau d'un premier point d'articulation (70) au niveau du premier système de direction (42) et est relié à l'électrode mobile (26) de manière à pouvoir pivoter autour d'un second axe de rotation (7) au niveau d'un second point d'articulation (72),
**caractérisé en ce que** le premier système de direction (42) peut pivoter autour d'un axe de rotation de support (G) comme axe de rotation du premier système de direction au niveau d'un point d'articulation (68) fixe par rapport aux parties statiques du dispositif, et **en ce que** le second système de direction (44) comporte en outre une pluralité de guides (44₁, 44₂), lesquels présentent principalement un premier axe de rotation commun (H) et un second axe de rotation commun (J) et sont disposés dans la direction du second axe de rotation (J) avec un intervalle l'un par rapport à l'autre.

2. Dispositif de fermeture selon la revendication 1,
**caractérisé en ce que** le second système de direction (44) comprend deux guides (44₁, 44₂).

3. Dispositif de fermeture selon l'une quelconque des revendications 1 ou 2,
**caractérisé en ce que** le second point d'articulation (72) est conçu, de sorte qu'une force allant du second système de direction (44) vers l'électrode (26) dans la direction de mouvement (W) de l'électrode et des forces opposées les unes aux autres (B₁, B₂) allant, au moins partiellement, dans la direction du second axe de rotation (J) peuvent être transmises.

4. Dispositif de fermeture selon la revendication 3,
**caractérisé en ce que** le second point d'articulation (72) est conçu, de sorte que d'un côté (du côté du système de direction ou du côté des électrodes), une partie saillante (106) est prévue avec une surface d'enveloppe conique, laquelle s'engrène au moins partiellement avec une surface périphérique (74b₁, 74b₂) adaptée en conséquence, de préférence conique complémentaire, d'un évidement de couplage (74) prévu de l'autre côté.

5. Dispositif de fermeture selon la revendication 4,
**caractérisé en ce que** l'évidement de couplage (74) est conçu à la manière d'un trou longitudinal (74) et est disposé de sorte que la direction longitudinale du trou longitudinal (74) va essentiellement dans la direction de mouvement (W) de l'électrode mobile (26) pour une position d'électrode prête au soudage.

6. Dispositif de fermeture selon la revendication 5,
**caractérisé en ce que** le mécanisme de levage (41) et le trou longitudinal (74) sont mesurés, de sorte que dans un état prêt au soudage du dispositif de soudage et dans un état allongé des systèmes de direction, l'électrode mobile (26) est placée sur une partie d'assemblage (84) sur le point de soudage principalement sans qu'une force ne soit exercée grâce au mécanisme de levage.

7. Dispositif de fermeture selon l'une quelconque des revendications précédentes,
**caractérisé en ce que** l'électrode mobile (26) est placée de manière à pouvoir pivoter autour de l'axe de rotation d'une électrode (E) au niveau d'un coussinet de pivotement (pour E), l'électrode étant reliée au coussinet de pivotement (pour E) au moyen d'un bras d'électrode de soudure (28).

8. Dispositif de fermeture selon la revendication 7,
**caractérisé en ce que** le bras d'électrode de soudure (28) présente deux supports (28₁, 28₂) disposés à distance l'un de l'autre dans la direction de l'axe de rotation de l'électrode (E).

9. Dispositif de fermeture selon la revendication 8 et en référence à la revendication 2,
**caractérisé en ce que** chaque guide (44₁, 44₂) du second système de direction (44) est articulé de manière à pouvoir pivoter autour du second axe de rotation (J) au niveau d'un support (28₁, 28₂).

10. Dispositif de fermeture selon l'une quelconque des revendications précédentes,
**caractérisé en ce qu'**il présente un élément d'effort (66), lequel alimente en force (O) l'électrode mobile par une source d'effort pouvant aller dans une des directions (O) : direction de l'élargissement de l'espace de soudage (O) ou diminution de l'espace de soudage (S).

11. Dispositif de fermeture selon la revendication 10,
**caractérisé en ce que** l'élément d'effort (66) s'engrène de préférence par transmission d'effort au niveau du premier système de direction (42) au niveau d'un des systèmes de direction (42, 44).

12. Dispositif de fermeture selon la revendication 10 ou 11,
**caractérisé en ce que** le premier système de direction (42) comprend au moins un guide d'angle (42) avec deux montants (42a, 42b) rejoignant un angle (*y*) prédéfini, un des montants (42a) présentant une zone d'introduction d'effort (pour 64) pour introduire l'effort de la source d'effort (30) ainsi qu'un point d'engrènement (pour D) de l'élément d'énergie (66) et étant conçu au niveau du second montant (42b) du premier point d'articulation (70) pour articuler le second système de direction (44).

13. Dispositif de fermeture selon l'une quelconque des revendications précédentes, de préférence en référence à l'une quelconque des revendications 7 à 9, **caractérisé en ce qu'**il comprend un appareil d'effort (108), lequel exerce un effort (Z₁, Z₂) agissant dans la direction de la diminution de l'espace de soudage sur l'électrode mobile (26), de préférence sur le bras de l'électrode de soudure (28).
